# EUROPÄISCHE PATENTSCHRIFT

(11) **EP 1 943 109 B1**
(45) Veröffentlichungstag und Bekanntmachung des Hinweises auf die Patenterteilung: **03.08.2011**
(21) Anmeldenummer: 06828495.9
(22) Anmeldetag: 02.11.2006
(51) Int. Cl.: B60B 27/00

(54) **RADNABE MIT ZWISCHEN DEN LÖCHERN FÜR RADSCHRAUBEN AUSGEBILDETEN AXIALEN AUSNEHMUNGEN**
WHEEL HUB COMPRISING AXIAL RECESSES FORMED BETWEEN THE HOLES FOR WHEEL NUTS
MOYEU DE ROUE POURVU D'EVIDEMENTS AXIAUX FORMES ENTRE LES TROUS DESTINES A DES BOULONS DE ROUE

(30) Priorität: 03.11.2005 DE 102005052479
(43) Veröffentlichungstag der Anmeldung: 16.07.2008
(73) Patentinhaber: Schaeffler Technologies GmbH & Co. KG, 97421 Schweinfurt (DE)
(72) Erfinder: HOFMANN, Heinrich, 97422 Schweinfurt (DE); DÖPPLING, Horst, 91074 Herzogenaurach (DE); NIEBLING, Peter, 97688 Bad Kissingen (DE); PLANK, Robert, 91085 Weisendorf (DE)
(86) Internationale Anmeldenummer: PCT/DE2006/001917
(87) Internationale Veröffentlichungsnummer: WO 2007/051453

(56) Entgegenhaltungen:
- EP-A- 1 500 524
- EP-A1- 0 834 670
- GB-A- 2 351 950
- JP-A- 7 317 755
- JP-A- 2003 094 905

## Beschreibung

### Gebiet der Erfindung

Die Erfindung betrifft eine Radnabe mit einem Zentralabschnitt und einem sich daran radial anschließenden Radialabschnitt, mit einem vom Zentralabschnitt axial abstehenden Lagerabschnitt zur Aufnahme eines Radlagers sowie mit einem axial gegenüberliegenden Aufnahmeanschnitt zur Aufnahme einer Bremsscheibe und einer Radfelge, wobei in dem Radialabschnitt Löcher zur Aufnahme von Radschrauben ausgebildet sind.

### Hintergrund der Erfindung

Radnaben für Kraftfahrzeuge sind dem Fachmann in vielen Ausgestaltungsvarianten bekannt. Sie werden im Kraftfahrzeug als Bindeglied zwischen einer Antriebswelle und einem Fahrzeugrad genutzt. Zur Verbindung mit der Antriebswelle weist eine Radnabe üblicherweise einen zentralen Aufnahmeabschnitt mit einer Steckverzahnung auf, in die das freie Ende der Antriebswelle einsteckbar ist. Zur Befestigung der Felge eines Fahrzeugrades sind an einem Radialabschnitt der Radnabe Löcher mit Schraubgewinde ausgebildet, in die unter Zwischenlage einer Bremsscheibe Radschrauben einschraubbar sind. Zudem weisen Radnaben üblicherweise einen Axialabschnitt zur Aufnahme und radialen Zentrierung der Radfelge bzw. der Bremsscheibe auf.

Es ist auch bekannt, dass derartige Radnaben mit nicht durchgängigen Materialausnehmungen versehen sind, um im Betrieb des Fahrzeuges die mit dem Fahrzeugrad drehenden Massen zu reduzieren, wodurch sich die Fahreigenschaften des Fahrzeugs verbessern lassen.

Aus der GB 2 351 950 A ist bereits eine Radnabe bekannt, welche zwischen den Löchern Ausnehmungen aufweist, mittels derer das Gewicht der Radnabe reduziert wird. Ferner ist die Radnabe mit einem Versteifungsmittel in Form eines radial äußeren verdickten Randes versehen. Der verdickte Rand steht axial über den Rand der Radnabe hinaus und erstreckt sich koaxial zu dem Lagerabschnitt der Radnabe.

### Aufgabe der Erfindung

Vor diesem Hintergrund liegt der Erfindung die Aufgabe zugrunde, eine solche Radnabe derart weiterzubilden, dass bei mit konventionellen. Radnaben vergleichbaren Abmessungen deren Masse weiter reduziert ist. Dabei soll die Radnabe eine hohe Kipp- und Verwölbungssteifigkeit aufweisen sowie eine genaue Führung der Bremsscheibe und der Felge sowohl im Hinblick auf die Anzugsdrehmomente der Radschrauben als auch in Bezug auf während des Betriebs auftretende Kräfte gewährleisten.

### Zusammenfassung der Erfindung

Zur Lösung dieser Aufgabe ist eine Radnabe mit den Merkmalen des Hauptanspruchs vorgesehen. Vorteilhafte Weiterbildungen und Ausgestaltungen der Erfindung sind den Unteransprüchen entnehmbar.

Demnach wird eine Radnabe vorgeschlagen, mit einem zentralabschnitt und einem sich daran anschließenden Radialabschnitt, mit einem vom Zentralabschnitt axial abstehenden Lagerabschnitt zur Aufnahme eines Radlagers sowie mit einem axial gegenüberliegenden Aufnahmeanschnitt zur Aufnahme einer Bremsscheibe bzw. Radfelge, wobei in dem Radialabschnitt Löcher zur Aufnahme von Radschrauben ausgebildet sind. Bei dieser Radnabe ist zudem vorgesehen, dass zumindest zwischen einigen Löchern im Radialabschnitt Ausnehmungen ausgebildet sind, die die Wand des Radialabschnitts vollständig durchdringen, und dass am radialen Ende der Radnabe zumindest ein Versteifungsmittel ausgebildet ist.

Das am Umfang der Radnabe ausgebildet. Versteifungsmittel sorgt für eine ausreichend hohe Steifigkeit der Radnabe trotz deren Aussparungen im Radialabschnitt, wobei das zusätzliche Material der Radnabe im Versteifungsbereich geringer ist als die Summe der Materialeinsparungen im Bereich der Aussparungen.

Erfindungsgemäß wird nunmehr vorgeschlagen, dass das Versteifungsmittel durch eine Mehrzahl von Nasen oder axialen Fortsätzen gebildet, die unter Einhaltung von Wischenräumen umfangsbezogen voneinander beabstandet sind. Bevorzugt sind diese Nasen in demjenigen Umfangssektor der Radnabe angeordnet, in dem auch die genannten Ausnehmungen in der Radnabe ausgebildet sind, wobei die Zwischenräume zwischen den Nasen im Bereich der genannten Löchern zur Aufnahme der Radschrauben freigehalten sind. Durch die Nasen oder axialen Fortsätze kann die Radnabe versteift werden, wobei durch die umfangs bezogene Beabstandung der Nasen bzw. Fortsätze zusätzlich das Gewicht der Radnabe verringert werden kann.

Gemäß der Erfindung ist zudem vorgesehen, dass die Ausnehmungen über den Umfang der Radnabe gleich verteilt zwischen jeweils zwei Löchern des Radialabschnittes ausgebildet sind.

Entsprechend einem weiteren bevorzugten Merkmal der Erfindung ist vorgesehen, dass zwischen zwei benachbarten Ausnehmungen der radial außen liegende kürzeste Abstand Sa zwischen diesen kleiner ist als ein Abstand Si zwischen zwei Punkten A, B der geringsten radialen Entfernung der Ausnehmungen zur Drehachse der Radnabe. Durch dieses Prinzip ist sichergestellt, das die beste Kombination von Gewichtsreduzierung, hoher Bauteilsteifigkeit und günstigster Spannungsverteilung in der Radnabe realisierbar ist.

Nach diesem Konstruklionsprinzip weisen die Ausnehmungen im Querschnitt zur Radialebene des Radialabschnitts daher favorisiert eine im Wesentlichen trapezförmige, nierenförmige oder dreieckförmige Geometrie mit vorzugsweise gerundeten Ecken auf.

Zudem kann vorgesehen sein, dass die Ausnehmungen in Richtung zum Lagerabschnitt gesehen über einen ersten Axialabschnitt; einen sich daran anschließenden zweiten Axialabschnitt sowie einen sich daran anschließenden dritten Axialabschnitt aufweisen. Während die Wandflächen der Ausnehmungen im ersten Axialabschnitt im Wesentlichen senkrecht zur Radialebene des Radialabschnitts, also parallel zur Drehachse der Radnabe, verlaufen, sind die Wandflächen der beiden letztgenannten Abschnitte der Ausnehmungen mit unterschiedlichen und axial kleiner werdenden Winkeln von weniger als 90° zur genannten. Radialebene angestellt. Dadurch weisen die Ausnehmungen sich stufig aufweitende Öffnungen auf.

Gemäß einem weiteren Merkmal kann vorgesehen, dass der Zentralabschnitt konisch ausgebildet ist, wobei sich dieser Zentralabschnitt in Richtung zum Lagerabschnitt axial verjüngt. Durch dieses konstruktive Detail wird eine besonders sichere Drehmomentübertragung von dem Zentralabschnitt der Radnabe in deren filigran aufgebauten Radialabschnitt erreicht. Zudem wird einer Bremsscheibe eine durch den konischen Verlauf vergrößerte axiale Anlagefläche geboten.

Eine andere Weiterbildung der Konstruktion der Radnabe sieht vor, dass sich die Ausnehmungen radial bis in den konischen Bereich des Zentralabschnitts erstrecken. Bei trapezförmigen bzw. nierenförmigen Ausnehmungen ist zudem bevorzugt vorgesehen, dass deren kurze Seite radial nach innen in Richtung zur Drehachse der Radnabe weist, so dass im umfangsbezogen längeren Abschnitt des Radialabschnitts der Radnabe mehr Material entnommen ist als im umfangsbezogen kürzeren, radial inneren Abschnitt desselben.

Hinsichtlich der im Wesentlichen dreieckförmigen Ausnehmungen ist vorgesehen, dass diese derart im Radialabschnitt der Radnabe ausgebildet sind, dass deren Dreieckspitze radial nach innen in Richtung zu Längsachse der Radnabe weist.

Dadurch, dass der Radialabschnitt der Radnabe im Bereich der Löcher für die Radschrauben eine axiale Wandstärke D1 aufweist, die größer ist als die axiale Wandstärke D2 im Bereich des ersten Axialabschnitts der Ausnehmungen, wird erreicht, dass sich beim Umformen und Lochen eines Radnabenrohlings eine geforderte bauteilbezogene Genauigkeit gut einhalten sowie die jeweiligen Fertigungsschritte problemlos durchführen lassen.

### Kurze Beschreibung der Zeichnungen

Die Erfindung wird im Folgenden anhand der beiliegenden Zeichnung an zwei Ausführungsformen näher erläutert. Darin zeigt
- Fig. 1: eine erste Ausführungsvariante einer erfindungsgemäß ausgebil- deten Radnabe, gesehen von der Antriebsseite,
- Fig. 2: die Radnabe gemäß Fig. 1, dargestellt von der gegenüberliegen- den Seite,
- Fig. 3: eine zweite Ausführungsvariante einer Radnabe gemäß der Erfin- dung, gesehen von der Felgen- und Bremsscheibenseite, und
- Fig. 4: die Radnabe gemäß Fig. 3, dargestellt von der gegenüberliegen- den Antriebsseite.

### Detaillierte Beschreibung der Zeichnungen

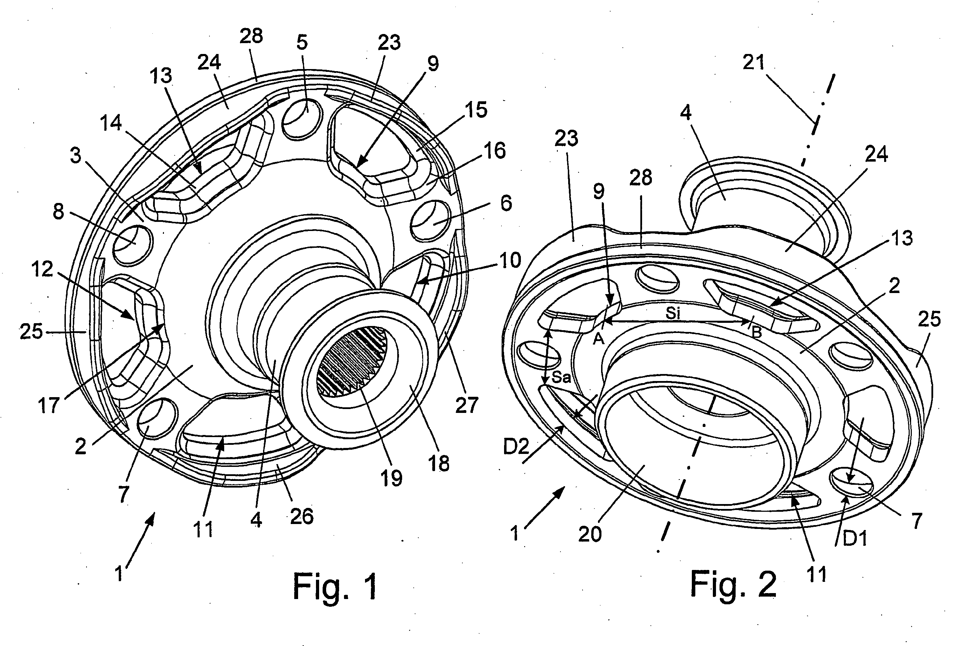

Wie die Figuren 1 und 2 verdeutlichen, umfasst eine erfindungsgemäß ausgebildete Radnabe 1 zunächst einen Zentralabschnitt 2, welcher im Wesentlichen senkrecht zur Längsachse 21 der Radnabe 1 ausgebildet ist. Von diesem Zentralabschnitt 2 erstrecken sich koaxial zur Längsachse 21 ein Lagerabschnitt 4 zur Aufnahme eines nicht gezeigten Radlagers sowie ein gestufter Aufnahmeabschnitt 20 zur Halterung und Zentrierung einer hier nicht dargestellten Bremsscheibe sowie einer ebenfalls nicht gezeigten Radfelge. Der Lagerabschnitt 4 ist so ausgebildet, dass auf seiner radialen Außenfläche ein Innenring des Radlagers befestigbar ist, während in seiner axialen Bohrung eine Steckverzahnung 19 zur Aufnahme eines axial verzahnten Zapfens einer Antriebswelle ausgebildet ist. Das freie axiale Ende des Lagerabschnitts 4 ist durch einen Ringwulst 18 begrenzt.

Der Zentralabschnitt 2 der Radnabe 1 ist in diesem Ausführungsbeispiel konisch zur Längsachse 21 ausgebildet, wobei der Durchmesser dieses Zentralabschnitts 2 von radial außen in Richtung zum Lagerabschnitt 4 abnimmt. Der Zentralabschnitt 2 geht an seinem durchmessergrößten Umfang in einen Radialabschnitt 3 über, der zur Befestigung der auf dem Aufnahmeabschnitt 20 der Radnabe 1 aufgeschobenen Bremsscheibe und Radfelge dient.

Zumindest die Radfelge ist mittels Radschrauben an dem Radialabschnitt 3 der Radnabe 1 befestigbar. Dazu werden die Radschrauben in die mit nicht dargestelltem Schraubgewinde versehenen Löcher 5, 6, 7 und 8 eingeschraubt.

In der Radnabe 1 sind deren Radialwand durchgreifende Ausnehmungen 9, 10, 11, 12 und 13 ausgebildet, die gleich verteilt zwischen den Löchern 5, 6, 7 und 8 angeordnet sind. In dem in den Figuren 1 und 2 dargestellten Ausführungsbeispiel weisen die Ausnehmungen 9, 10, 11, 12 und 13 eine im Wesentlichen trapezförmige Querschnittsgeometrie in der Radialebene auf. Dabei ist die umfangsbezogen längere Seite der Ausnehmungen radial außen und die umfangsbezogen kürzere Seite radial innen am Radialabschnitt 3 ausgebildet. Wie diese Figuren 1 und 2 deutlich zeigen, können sich die Ausnehmungen 9, 10, 11, 12 und 13 radial bis in den konischen Zentralabschnitt 2 hinein erstrecken.

Die Ausnehmungen 9, 10, 11, 12 und 13 weisen in Richtung zum Lagerabschnitt 4 gesehen jeweils drei Axialabschnitte 14, 15 und 16 auf, von denen der ersten Axialabschnitte 14 im Wesentlichen parallel zur Längsachse 21 bzw. senkrecht zur Radialebene des Radialabschnitts 3 ausgerichtete Wandflächen aufweist, während die Wandflächen der beiden daran anschließenden Axialabschnitte 15 und 16 mit unterschiedlichen und zueinander axial abnehmenden Winkel von weniger als 90° zur Radialebene angestellt sind.

Zudem kann gemäß einer anderen vorteilhaften Ausgestaltung vorgesehen sein, dass die Ausnehmungen 9, 10, 11, 12 und 13 an ihrer radial innen liegenden Seite einen bogenförmigen Verlauf 17 aufweisen und/oder insgesamt abgerundete Ecken haben. Dadurch weisen die Ausnehmungen 9, 10, 11, 12 und 13 eine etwa nierenförmige Geometrie auf. Durch die geschilderte Ausbildung der Ränder und der Seiten der Ausnehmungen 9, 10, 11, 12 und 13 ist ein spannungsarmer Kraftverlauf innerhalb der Radnabe 1 realisiert.

Fig. 2 verdeutlicht, dass die Radnabe 1 wegen der gestuften Axialabschnitte 13, 14, 15 der Ausnehmungen 9, 10, 11, 12 und 13 in deren Bereich sowie im Bereich der Löcher 5, 6, 7, 8 unterschiedliche Wandstärken aufweist. So ist die Wandstärke D1 im Bereich der Löcher 5, 6, 7, 8 größer ist als die Wandstärke D2 im Bereich des ersten Axialabschnitts 13 der Ausnehmungen 9, 10, 11, 12 und 13. Bevorzugt ist die Wandstärke D1 im Bereich der Löcher 5, 6, 7, 8 mehr als doppelt so groß wie die Wandstärke D2.

Durch die Wandstärkenausbildung ist beim fertigungstechnischen Erzeugen der Ausnehmungen 9, 10, 11, 12,13 und der Löcher 5, 6, 7, 8 die Werkstückintegrität sowie eine hohe Fertigungsgenauigkeit gewährleistet. Dabei werden die Ausnehmungen 9, 10, 11, 12 und 13 vorzugsweise durch einen Umformvorgang und die Löcher 5, 6, 7; 8 durch Bohren hergestellt.

Gemäß einem weiteren Aspekt der Erfindung ist vorgesehen, dass die Ausnehmungen 9, 10, 11, 12, 13 hinsichtlich ihrer Abmessungen und ihres Abstandes dahingehend optimiert ausgebildet sind, dass eine möglichst leichte Radnabe 1 herstellbar ist, die alle auf diese einwirkenden Betriebsbelastungen unbeschadet aufnehmen kann und eine umfangsbezogen nicht wellige Anlagefläche für eine Bremsscheibe bildet.

Dazu sind die Ausnehmungen 9, 10, 11, 12,13 derart ausgebildet und zueinander beabstandet, dass der radial außen liegende kürzeste Abstand Sa zwischen zwei benachbarten Ausnehmungen kleiner ist als derjenige Abstand Si zwischen zwei Punkten A und B, die den geringsten radialen Abstand der Ausnehmungen 9, 10, 11, 12,13 zur Drehachse 21 der Radnabe 1 markieren.

Die Ausnehmungen 9, 10, 11, 12,13 können in ihrem radial äußeren Bereich auch weitgehend oval und im radial zur Drehachse 21 weisenden Bereich vergleichsweise spitz ausgebildet sein, welches hier nicht weiter dargestellt ist. Dabei erstreckt sich die Spitze der jeweiligen Ausnehmungen 9,10, 11, 12,13 radial in Richtung zur Drehachse 21 der Radnabe 1. Die genannten Punkte A und B von zwei benachbarten Ausnehmungen 9, 10, 11, 12,13 sind hierbei durch die jeweilige Spitze definiert.

Zur Versteifung der Radnabe 1 weist diese gemäß dem in den Figuren 1 und 2 gezeigtem Ausführungsbeispiel Nasen 23, 24, 25, 26 und 27 auf, die sich koaxial vom radialen Ende 28 der Radnabe 1 in Richtung zum Lagerabschnitt 4 erstrecken. Dabei ist zwischen jeder Nase umfangsbezogen ein Zwischenraum freigelassen, der im Bereich der Löcher 5, 6, 7 und 8 zur Aufnahme der Radschrauben ausgebildet ist. Wie die Figuren 1 und 2 verdeutlichen, weisen die Nasen 23, 24, 25, 26 und 27 einen weitgehend bogenförmigen Verlauf auf, wobei sich die größte axiale Erstreckung etwa in der Mitte der zugeordneten Aussparung 9, 10, 11, 12,13 befindet.

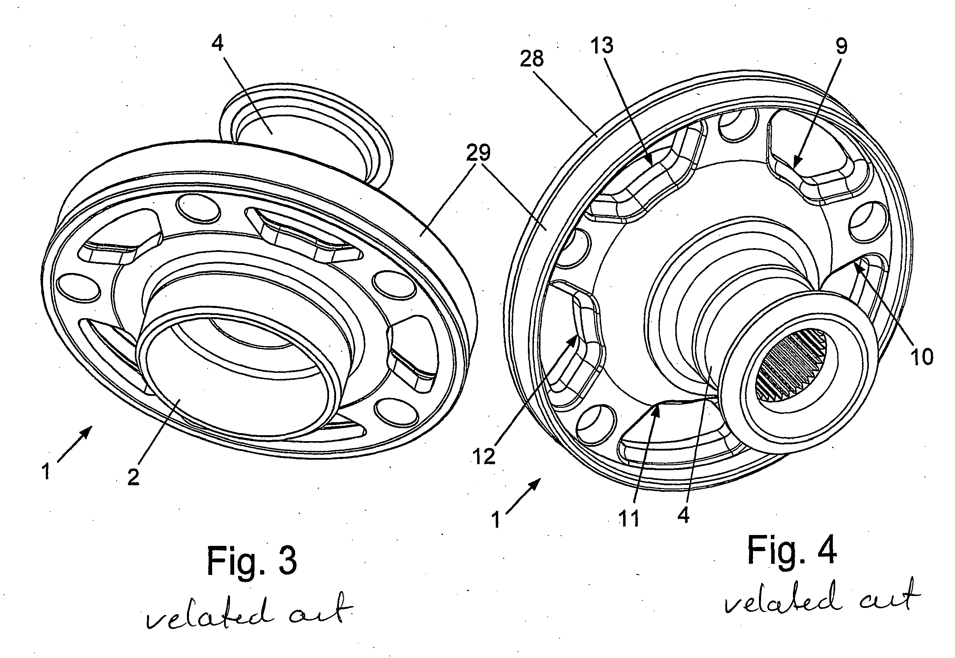

Den nicht erfindungsgemässen Figuren 3 und 4 ist entnehmbar, dass das Versteifungsmittel auch durch einen Verstärkungsring 29 gebildet sein kann, welcher am radialen Ende 28 der Radnabe 1 angesetzt ist und sich koaxial in Richtung des Lagerabschnitts 4 erstreckt sowie dabei alle Löcher 5, 6, 7, 8 und Aussparung 9, 10, 11,12,13 überdeckt.

### Bezugszeichen

- 1: Radnabe
- 2: Zentralabschnitt
- 3: Radialabschnitt
- 4: Lagerabschnitt
- 5: Loch für Radschraube
- 6: Loch für Radschraube
- 7: Loch für Radschraube
- 8: Loch für Radschraube
- 9: Ausnehmung
- 10: Ausnehmung
- 11: Ausnehmung
- 12: Ausnehmung
- 13: Ausnehmung
- 14: Erster Axialabschnitt
- 15: Zweiter Axialabschnitt
- 16: Dritter Axialabschnitt
- 17: Bogenförmiger Verlauf der Ausnehmung
- 18: Ringwulst
- 19: Steckverzahnung
- 20: Aufnahmeanschnitt für Bremsscheibe und Radfelge
- 21: Drehachse
- 23: Nase
- 24: Nase
- 25: Nase
- 26: Nase
- 27: Nase
- 28: Radiales Ende der Radnabe
- 29: Verstärkungsring
- A: Punkt an einer Ausnehmung
- B: Punkt an einer Ausnehmung
- D1: Wandstärke
- D2: Wandstärke
- Sa: Abstand außen
- Si: Abstand innen

## Patentansprüche

1. Radnabe (1) mit einem Zentralabschnitt (2) und einem sich daran radial anschließenden Radialabschnitt (3), mit einem vom Zentralabschnitt (2) axial abstehenden Lagerabschnitt (4) zur Aufnahme eines Radlagers sowie mit einem axial gegenüberliegenden Aufnahmeanschnitt (20) zur Aufnahme einer Bremsscheibe und einer Radfelge, wobei in dem Radialabschnitt (3) Löcher (5, 6, 7, 8) zur Aufnahme von Radschrauben ausgebildet sind, wobei die Radnabe (1) zumindest zwischen einigen Löchern (5, 6, 7, 8) Ausnehmungen (9, 10, 11, 12, 13) aufweist, die die Wand des Radialabschnitts (3) der Radnabe (1) vollständig durchdringen, und dass am radialen Ende (28) der Radnabe (1) zumindest ein Versteifungsmittel ausgebildet ist, und
sich das Versteifungsmittel axial über den Rand der Radnabe (1) hinaus in Richtung und koaxial zum Lagerabschnitt (4) erstreckt,
**dadurch gekennzeichnet, dass** das Versteifungsmiftel als eine Mehrzahl von Nasen (23, 24, 25, 26, 27) ausgebildet ist, die unter Einhaltung von Zwischenräumen umfangsbezogen voneinander beabstandet sind.

2. Radnabe nach Anspruch 1, **dadurch gekennzeichnet, dass** die Nasen (23, 24, 25, 26, 27) in demjenigen Umfangssektor der Radnabe (1) angeordnet sind, in dem auch die Ausnehmungen (9, 10, 11, 12, 13) in der Radnabe (1) ausgebildet sind, und dass die Zwischenräume im Bereich der Löchern (5,6,7,8) freigehalten sind.

3. Radnabe nach zumindest einem der Ansprüche 1 oder 2, **dadurch gekennzeichnet, dass** die Ausnehmungen (9, 10, 11, 12, 13) gleichverteilt zwischen jeweils zwei Löchern (5, 6, 7, 8) des Radialabschnitts (3) ausgebildet sind.

4. Radnabe nach zumindest einem der Ansprüche 1 bis 3, **dadurch gekennzeichnet, dass** zwischen zwei benachbarten Ausnehmungen (9, 13) der radial außen liegende kürzeste Abstand (Sa) zwischen diesen kleiner ist als ein Abstand (Si) zwischen zwei Punkten (A, B) der geringsten radialen Entfernung der Ausnehmungen (9, 13) zur Drehachse (21) der Radnabe (1).

5. Radnabe nach Anspruch 4, **dadurch gekennzeichnet, dass** die Ausnehmungen (9, 10, 11, 12, 13) in der Radialebene des Radialabschnitts (3) einen im Wesentlichen trapezförmigen, nierenförmigen oder dreleckförmigen Querschnitt aufweisen.

6. Radnabe nach Anspruch 4 oder 5, **dadurch gekennzeichnet, dass** die trapezförmigen oder nierenförmigen Ausnehmungen (9, 10, 11, 12, 13) derart in der Radnabe (1) ausgebildet sind, dass deren kurze Seite radial nach innen in Richtung zur Längsachse (21) der Radnabe weist.

7. Radnabe nach Anspruch 4 oder 5, **dadurch gekennzeichnet, dass** die dreieckförmigen Ausnehmungen (9, 10, 11, 12, 13) derart in der Radnabe (1) ausgebildet sind, dass deren Spitze (22) radial nach innen in Richtung zur Längsachse (21) der Radnabe weist.

8. Radnabe nach zumindest einem der vorherigen Ansprüche, **dadurch gekennzeichnet, dass** die Ausnehmungen (9, 10, 11, 12, 13) in Richtung zum Lagerabschnitt (4) gesehen einen ersten Axialabschnitt (14), einen sich daran anschließenden zweiten Axialabschnitt (16) sowie eine sich daran anschließenden dritten Axialabschnitt (16) aufweisen, wobei die Wandflächen der Ausnehmungen (9, 10, 11, 12, 13) im ersten Axialabschnift (14) im Wesentlichen senkrecht zur Radialebene des Radialabschnitts (3) verlaufen, während die Wandflächen der beiden anderen Axialabschnitte (15, 16) mit unterschiedlichen und axial kleiner werdenden Winkeln von weniger als 90° zur genannten Radialebene angestellt sind.

9. Radnabe nach zumindest einem der vorherigen Ansprüche, **dadurch gekennzeichnet, dass** der zentralabschnitt (2) konisch ausgebildet ist, wobei sich der Zentralabschnitt (2) in Richtung zum Lagerabschnitt (4) axial verjüngt.

10. Radnabe nach Anspruch 9, **dadurch gekennzeichnet, dass** sich die Ausnehmungen (9, 10, 11, 12, 13) radial bis in den konischen Bereich des Zentralabschnitts (2) erstrecken.

11. Radnabe nach zumindest einem der vorherigen Ansprüche, **dadurch gekennzeichnet, dass** der Radialabschnitt (3) der Radnabe (1) im Bereich der Löcher (5, 6, 7, 8) eine axiale Dicke (D1) aufweist, die größer ist als die axiale Dicke (D2) im Bereich des ersten Axialabschnitt (13) der Ausnehmungen (9,10,11,12,13).

12. Radnabe nach zumindest einem der vorherigen Ansprüche, **dadurch gekennzeichnet, dass** die Ausnehmungen (9, 10, 11, 12, 13) gerundete Ecken aufweisen.

## Claims

1. Wheel hub (1) having a central section (2) and a radial section (3) which adjoins the latter radially, having a bearing section (4) which protrudes axially from the central section (2) for receiving the wheel bearing and having a receiving notch (20) which lies axially opposite for receiving a brake disk and a wheel rim, holes (5, 6, 7, 8) being formed in the radial section (3) for receiving wheel nuts, the wheel hub (1) having recesses (9, 10, 11, 12, 13) at least between some holes (5, 6, 7, 8), which recesses (9, 10, 11, 12, 13) penetrate the wall of the radial section (3) of the wheel hub (1) completely, and at least one reinforcing means being formed on the radial end (28) of the wheel hub (1), and the reinforcing means extending axially beyond the edge of the wheel hub (1) in the direction of and coaxially with respect to the bearing section (4), **characterized in that** the reinforcing means is configured as a multiplicity of lugs (23, 24, 25, 26, 27) which are spaced apart from one another with the maintenance of intermediate spaces in relation to the circumference.

2. Wheel hub according to Claim 1, **characterized in that** the lugs (23, 24, 25, 26, 27) are arranged **in that** circumferential sector of the wheel hub (1), in which the recesses (9, 10, 11, 12, 13) are also formed in the wheel hub (1), and **in that** the intermediate spaces are kept free in the region of the holes (5, 6, 7, 8).

3. Wheel hub according to at least one of Claims 1 or 2, **characterized in that** the recesses (9, 10, 11, 12, 13) are formed in a uniformly distributed manner between in each case two holes (5, 6, 7, 8) of the radial section (3).

4. Wheel hub according to at least one of Claims 1 to 3, **characterized in that**, between two adjacent recesses (9, 13), the shortest spacing (Sa) which lies radially to the outside between the former is smaller than a spacing (Si) between two points (A, B) of the smallest radial distance of the recesses (9, 13) to the rotational axis (21) of the wheel hub (1).

5. Wheel hub according to Claim 4, **characterized in that** the recesses (9, 10, 11, 12, 13) have a substantially trapezoidal, kidney-shaped or triangular cross section in the radial plane of the radial section (3).

6. Wheel hub according to Claim 4 or 5, **characterized in that** the trapezoidal or kidney-shaped recesses (9, 10, 11, 12, 13) are formed in the wheel hub (1) in such a way that their short side points radially to the inside in the direction of the longitudinal axis (21) of the wheel hub.

7. Wheel hub according to Claim 4 or 5, **characterized in that** the triangular recesses (9, 10, 11, 12, 13) are formed in the wheel hub (1) in such a way that their tip (22) points radially to the inside in the direction of the longitudinal axis (21) of the wheel hub.

8. Wheel hub according to at least one of the preceding claims, **characterized in that** the recesses (9, 10, 11, 12, 13), as viewed in the direction of the bearing section (4), have a first axial section (14), a second axial section (15) which adjoins said first axial section (14) and a third axial section (16) which adjoins said second axial section (15), the wall faces of the recesses (9, 10, 11, 12, 13) in the first axial section (14) extending substantially perpendicularly with respect to the radial plane of the radial section (3), while the wall faces of the two other axial sections (15, 16) are set with respect to said radial plane at different angles, which becomes smaller axially, of less than 90°.

9. Wheel hub according to at least one of the preceding claims, **characterized in that** the central section (2) is of conical configuration, the central section (2) tapering axially in the direction of the bearing section (4).

10. Wheel hub according to Claim 9, **characterized in that** the recesses (9, 10, 11, 12, 13) extend radially as far as into the conical region of the central section (2).

11. Wheel hub according to at least one of the preceding claims, **characterized in that** the radial section (3) of the wheel hub (1) has an axial thickness (D1) in the region of the holes (5, 6, 7, 8), which axial thickness (D1) is greater than the axial thickness (D2) in the region of the first axial section (13) of the recesses (9, 10, 11, 12, 13).

12. Wheel hub according to at least one of the preceding claims, **characterized in that** the recesses (9, 10, 11, 12, 13) have rounded corners.

## Revendications

1. Moyeu de roue (1) comprenant une portion centrale (2) et une portion radiale (3) se raccordant radialement à celle-ci, une portion de palier (4) saillant axialement depuis la portion centrale (2) pour recevoir un palier de roue ainsi qu'une portion de réception axialement opposée (20) pour recevoir un disque de frein et une jante de roue, des trous (5, 6, 7, 8) étant réalisés dans la portion radiale (3) pour recevoir des vis de roue, le moyeu de roue (1) présentant au moins entre certains trous (5, 6, 7, 8) des évidements (9, 10, 11, 12, 13), qui traversent complètement la paroi de la portion radiale (3) du moyeu de roue (1), et au moins un moyen de rigidification étant réalisé sur l'extrémité radiale (28) du moyeu de roue (1), et le moyen de rigidification s'étendant axialement au-delà du bord du moyeu de roue (1) dans la direction de la portion de palier (4) et coaxialement à celle-ci,
**caractérisé en ce que** le moyen de rigidification est réalisé sous forme d'une pluralité de becs (23, 24, 25, 26, 27) qui sont espacés les uns des autres en maintenant des espaces intermédiaires sur la périphérie.

2. Moyeu de roue selon la revendication 1, **caractérisé en ce que** les becs (23, 24, 25, 26, 27) sont disposés dans le secteur périphérique du moyeu de roue (1) dans lequel sont également réalisés les évidements (9, 10, 11, 12, 13) dans le moyeu de roue (1), et **en ce que** les espaces intermédiaires sont laissés libres dans la région des trous (5, 6, 7, 8).

3. Moyeu de roue selon au moins l'une quelconque des revendications 1 ou 2, **caractérisé en ce que** les évidements (9, 10, 11, 12, 13) sont réalisés de manière répartie uniformément à chaque fois entre deux trous (5, 6, 7, 8) de la portion radiale (3).

4. Moyeu de roue selon au moins l'une quelconque des revendications 1 à 3, **caractérisé en ce qu'**entre deux évidements adjacents (9, 13), la distance radialement extérieure la plus courte (Sa) entre ceux-ci est inférieure à une distance (Si) entre deux points (A, B) de l'éloignement radial le plus petit des évidements (9, 13) à l'axe de rotation (21) du moyeu de roue (1).

5. Moyeu de roue selon la revendication 4, **caractérisé en ce que** les évidements (9, 10, 11, 12, 13) présentent dans le plan radial de la portion radiale (3) une section transversale essentiellement en forme de trapèze, de haricot, ou de triangle.

6. Moyeu de roue selon la revendication 4 ou 5, **caractérisé en ce que** les évidements (9, 10, 11, 12, 13) en forme de trapèze ou de haricot sont réalisés dans le moyeu de roue (1) de telle sorte que leur côté court soit tourné radialement vers l'intérieur dans la direction de l'axe longitudinal (21) du moyeu de roue.

7. Moyeu de roue selon la revendication 4 ou 5, **caractérisé en ce que** les évidements (9, 10, 11, 12, 13) en forme de triangle sont réalisés dans le moyeu de roue (1) de telle sorte que leur pointe (22) soit tournée radialement vers l'intérieur dans la direction de l'axe longitudinal (21) du moyeu de roue.

8. Moyeu de roue selon au moins l'une quelconque des revendications précédentes, **caractérisé en ce que** les évidements (9, 10, 11, 12, 13) présentent dans la direction de la portion de palier (4), une première portion axiale (14), une deuxième portion axiale (15) s'y raccordant ainsi qu'une troisième portion axiale (16) s'y raccordant, les surfaces de paroi des évidements (9, 10, 11, 12, 13) dans la première portion axiale (14) s'étendant essentiellement perpendiculairement au plan radial de la portion radiale (3), tandis que les surfaces de paroi des deux autres portions axiales (15, 16) sont inclinés avec différents angles devenant de plus en plus petits, de moins de 90° par rapport audit plan radial.

9. Moyeu de roue selon au moins l'une quelconque des revendications précédentes, **caractérisé en ce que** la portion centrale (2) est réalisée sous forme conique, la portion centrale (2) se rétrécissant axialement dans la direction de la portion de palier (4).

10. Moyeu de roue selon la revendication 9, **caractérisé en ce que** les évidements (9, 10, 11, 12, 13) s'étendent radialement jusque dans la région conique de la portion centrale (2).

11. Moyeu de roue selon au moins l'une quelconque des revendications précédentes, **caractérisé en ce que** la portion radiale (3) du moyeu de roue (1) présente dans la région des trous (5, 6, 7, 8) une épaisseur axiale (D1) qui est supérieure à l'épaisseur axiale (D2) dans la région de la première portion axiale (13) des évidements (9, 10, 11, 12, 13).

12. Moyeu de roue selon au moins l'une quelconque des revendications précédentes, **caractérisé en ce que** les évidements (9, 10, 11, 12, 13) présentent des coins arrondis.
